# EUROPÄISCHE PATENTSCHRIFT

(11) **EP 2 984 716 B1**
(45) Veröffentlichungstag und Bekanntmachung des Hinweises auf die Patenterteilung: **21.08.2019**
(21) Anmeldenummer: 14715210.2
(22) Anmeldetag: 22.03.2014
(51) Int. Cl.: H02B 1/32

(54) **MONTAGESYSTEM FÜR DIE ANORDNUNG VON BEISPIELSWEISE ELEKTRISCHEN EINRICHTUNGEN INSBESONDERE IN SCHALTSCHRÄNKEN**
MOUNTING SYSTEM FOR THE ARRANGEMENT OF ELECTRICAL DEVICES IN PARTICULAR IN ELECTRICAL CABINETS
SYSTÈME DE MONTAGE D'ÉQUIPEMENTS ÉLECTRIQUES EN PARTICULIER DANS DES ARMOIRES ÉLECTRIQUES

(30) Priorität: 08.04.2013 DE 102013006551
(43) Veröffentlichungstag der Anmeldung: 17.02.2016
(73) Patentinhaber: Friedrich Lütze GmbH, 71366 Weinstadt-Gro Heppach (DE)
(72) Erfinder: LÜTZE, Udo, 71394 Kernen-Stetten (DE); LANG, Jürgen, 71640 Ludwigsburg (DE); GHIZELEA, Virgil, 70372 Stuttgart (DE)
(74) Vertreter: Bartels und Partner, Patentanwälte
(86) Internationale Anmeldenummer: PCT/EP2014/000781
(87) Internationale Veröffentlichungsnummer: WO 2014/166591

(56) Entgegenhaltungen:
- EP-A1- 0 237 410
- DE-A1- 19 908 350
- DE-U1- 29 606 911
- NL-C2- 1 018 058
- US-B1- 6 378 825

## Beschreibung

Die Erfindung betrifft ein Montagesystem für die Anordnung von beispielsweise elektrischen Einrichtungen insbesondere in Schaltschränken mit den Merkmalen im Oberbegriff von Anspruch 1.

In der industriellen Steuerungstechnik werden elektrische Geräte oder Einrichtungen häufig in Schaltschränken oder Schaltkästen angeordnet. Bekannt sind Schaltschranksysteme, bei denen die Einrichtungen unmittelbar auf einer flächigen Montageplatte angeordnet sind, die sich über die gesamte Bestückungsfläche des Schaltschrankes erstrecken kann. Einzelne, insbesondere kleinere Einrichtungen mit relativ geringer Masse können auch auf einer Hutschiene angeordnet werden, die beispielsweise durch eine Nietverbindung an der Montageplatte befestigt werden kann. In alternativen Montagesystemen werden die Einrichtungen nicht auf einer Montageplatte, sondern auf Montagestegen eines aus Profilleisten gebildeten Montagerahmens aneinandergereiht. Ein solches Montagesystem wird von der Anmelderin Friedrich Lütze GmbH in 71384 Weinstadt seit Jahrzehnten angeboten.

Die EP 0 237 410 A1 beschreibt ein Montagesystem für die Anordnung von beispielsweise elektrischen Einrichtungen insbesondere in Schaltschränken, wobei das Montagesystem eine beispielsweise in einem Schaltschrank anordenbare Montageplatte und auf der Vorderseite der Montageplatte mindestens ein Montagemodul mit einem vorzugsweise horizontal verlaufenden Montagesteg aufweist, und der Montagesteg eine Trageinrichtung aufweist, mittels welcher mindestens eine Einrichtung an dem Montagesteg anbringbar ist, und wobei das Montagesystem ein Klemmelement aufweist, das mit einem ersten Abschnitt in Anlage an die Rückseite der Montageplatte bringbar ist und mit einem zweiten Abschnitt auf der Vorderseite der Montageplatte mit dem Montagemodul derart verbindbar ist, dass die Montageplatte zwischen dem Montagemodul und dem ersten Abschnitt des Klemmelements klemmbar ist und dadurch das Montagemodul an der Montageplatte klemmend festlegbar ist. Das Klemmelement ist dabei durch die Montageplatte gesteckt.

Weitere Montagesysteme gehen aus der NL 1 018 058 C und der DE 296 06911 U1 hervor.

Der vorliegenden Erfindung liegt die Aufgabe zugrunde, ein neues Montagesystem bereitzustellen, das noch weiter verbesserte Gebrauchseigenschaften aufweist, insbesondere vielseitig einsetzbar ist und dabei dennoch einfach in der Handhabung und Montage ist. In einer Ausführungsart soll das Montagesystem die Kühlung der daran angeordneten Einrichtungen noch weiter verbessern und den diesbezüglichen Energieaufwand noch weiter reduzieren.

In einer Ausführungsart ist die Aufgabe durch das im Anspruch 1 bestimmte Montagesystem gelöst. Besondere Ausführungsarten der Erfindung sind in den Unteransprüchen bestimmt.

Gemäß dem Kennzeichen von Anspruch 1 ist vorgesehen, dass das Klemmelement einen Seitenrand der Montageplatte umgreift und der erste Abschnitt des Klemmelements in flächige Anlage an die Rückseite der Montageplatte bringbar ist. Durch die Klemmung im Bereich des Seitenrandes der Montageplatte erfolgt die Verbindung mit hoher mechanischer Festigkeit und darüber hinaus wird die Montageplatte durch das Anbringen des Montagemoduls weiter ausgesteift. Ergänzend können auch Klemmelemente im Bereich einer in der Montageplatte ohnehin vorhandenen Öffnung angesetzt werden, und dabei kann das Klemmelement die Öffnung der Montageplatte durchgreifen, bis der erste Abschnitt des Klemmelements auf der Rückseite der Montageplatte in klemmende Anlage bringbar ist.

In einer Ausführungsart weist das Montagesystem mindestens einen vorzugsweise horizontal verlaufenden Montagesteg auf, der vorzugsweise einstückig eine Trageinrichtung ausbildet, mittels welcher mindestens eine Einrichtung, vorzugsweise eine Vielzahl von Einrichtungen an dem Montagesteg anbringbar ist. Die Trageinrichtung kann sich über die gesamte Länge des Montagesteges erstrecken und beispielsweise eine Tragschiene aufweisen, etwa eine genormte oder eine einer Norm im Wesentlichen entsprechende Hutschiene, und/oder einen Gleitmutterkanal. Der Montagesteg kann durch Ablängen eines Strangpressprofils beispielsweise aus Aluminium hergestellt sein.

In einer Ausführungsart der Erfindung ist das Montagesystem für den Innenausbau von Schaltschränken geeignet, wie sie in der industriellen Fertigungstechnik üblich sind. Je nach Anwendung kommen dabei überwiegend elektrische Einrichtungen zum Einbau in den Schaltschrank, etwa Stromversorgungen, Sicherungen, Steuerungen, Ein-/Ausgabe-Baugruppen, Frequenzumrichter, Relais, Leistungsschütze, Transformatoren oder dergleichen, grundsätzlich können aber auch nicht-elektrische Komponenten wie beispielsweise optische, hydraulische oder pneumatische Einrichtungen mit Hilfe des Montagesystems angeordnet werden.

Das Montagesystem weist in einer Ausführungsart der Erfindung eine flächige Montageplatte sowie auf der Vorderseite der Montageplatte mindestens ein Montagemodul auf, wobei das Montagemodul einen vorzugsweise horizontal verlaufenden Montagesteg und mindestens einen, vorzugsweise zwei Montagebügel aufweist. Der Montagesteg und damit das Montagemodul ist mittels des Montagebügels und einem Klemmelement oder Klemmprofil an der Montageplatte festlegbar.

Grundsätzlich wäre es möglich, den Montagesteg mittels eines Verbindungselements unmittelbar an der Montageplatte zu befestigen, beispielsweise durch eine Schraubverbindung oder eine Nietverbindung. Dies wäre allerdings nachteilig dahingehend, dass an der Montageplatte entsprechende Bohrungen vorgesehen sein müssten, was eine Bearbeitung der Montageplatte erforderlich macht, und die Montagestege nur an den vorgesehenen Bohrungen mit der Montageplatte verbindbar wären. In einer ersten Ausführungsart weist das erfindungsgemäße Montagesystem für die Verbindung des Montagemoduls mit der Montageplatte daher ein Klemmelement auf, das mit einem ersten Abschnitt in Anlage an die Rückseite der Montageplatte bringbar ist und mit einem zweiten Abschnitt auf der Vorderseite der Montageplatte mit dem Montagemodul derart verbindbar ist, dass die Montageplatte zwischen dem Montagemodul und dem ersten Abschnitt des Klemmelements klemmbar ist und dadurch das Montagemodul an der Montageplatte klemmend festlegbar ist. Gegenüber einer Schraubverbindung oder Nutverbindung des Montagesteges an der Montageplatte ist dabei vorteilhaft, dass das Klemmelement im Bereich einer bereits vorhandenen und nahezu beliebig geformten Öffnung der Montageplatte oder vorzugsweise auch im Bereich eines Randes der Montageplatte anbringbar ist und daher keine Bearbeitung der Montageplatte erforderlich ist.

Die Montageplatte ist vorzugsweise selbsttragend, beispielsweise indem mindestens zwei parallel zueinander verlaufende Ränder der Montageplatte L-förmig oder sogar U-förmig zur Rückseite hin umgebogen sind. In einer Ausführungsart ist der Abstand zwischen der an die Rückseite der Montageplatte in Anlage bringbaren Fläche des ersten Abschnitts des Klemmelements und einer dem Montagemodul zugewandten Verbindungsfläche oder Anlagefläche des zweiten Abschnitts des Klemmelements kleiner als die Wandstärke der Montageplatte im Bereich des Klemmelements. Dadurch ist durch das Verbinden des Montagemoduls mit dem zweiten Abschnitt des Klemmelements das Montagemodul in klemmende Anlage an die Montageplatte bringbar, und somit eine sichere Klemmung gewährleistet. Die dem Klemmelement zugewandte Verbindungsfläche des Montagemoduls kann dabei bündig sein mit einer der Montageplatte zugewandten Anlagefläche des Montagemoduls. Alternativ hierzu kann die dem Klemmelement zugewandte Verbindungsfläche des Montagemoduls auch gegenüber einer der Montageplatte zugewandten Anlagefläche des Montagemoduls vorstehen oder zurückversetzt sein, insbesondere können die dem Klemmelement zugewandte Verbindungsfläche des Montagemoduls und die der Montageplatte zugewandte Anlagefläche des Montagemoduls parallel zueinander verlaufen und lediglich gekröpft sein.

In einer Ausführungsart ist ein Rand der Montageplatte im Bereich des Klemmelements zur Rückseite hin um 180° umgebogen. Der umgebogene Randabschnitt kann dabei auf der Rückseite der Montageplatte frei auslaufen, insbesondere mit einem parallel zur Vorderseite der Montageplatte verlaufenden Randabschnitt. Der erste Abschnitt des Klemmelements kann den frei auslaufenden Randabschnitt der Montageplatte auf deren Rückseite übergreifen, insbesondere kann das Klemmelement dadurch auch verrastend an dem Randabschnitt anbringbar sein. Das Übergreifen kann außerdem einer exakten Positionierung des Klemmelements in Bezug auf die Montageplatte dienen.

In einer Ausführungsart ist das Klemmelement leistenförmig. Der erste Abschnitt und der zweite Abschnitt des Klemmelements erstrecken sich vorzugsweise über die gesamte Länge des leistenförmigen Klemmelements.

Das leistenförmige Klemmelement kann beispielsweise als Strangpressprofil hergestellt sein und auf die gewünschte Länge abgelängt worden sein. Die Länge des leistenförmigen Klemmelements kann dabei der Länge eines Seitenrandes der Montageplatte entsprechen, insbesondere dann, wenn über den gesamten Bereich der Montageplatte Montagemodule anbringbar sein sollen. Alternativ hierzu kann die Länge des leistenförmigen Klemmelements auch kürzer sein als die Seitenlänge der Montageplatte, insbesondere dann, wenn nur über einen bestimmten Abschnitt der Montageplatte erfindungsgemäße Montagemodule montiert werden sollen.

Insgesamt wird durch das erfindungsgemäße Montagesystem eine hohe Vielseitigkeit erreicht, da je nach Anwendungsfall nur ein Teil der Montageplatte oder die gesamte Montageplatte mit Montagemodulen ausgerüstet werden kann, insbesondere kann die Ausrüstung der Montageplatte mit vorgefertigten Montagemodulen noch am Ort der Installation gewählt oder verändert werden, ohne dass die Montageplatte bearbeitet werden muss. Durch das erfindungsgemäße Montagesystem kann auch eine Erweiterung mit einem oder mehreren weiteren Klemmelementen oder Klemmprofilen vorgenommen werden.

Ein weiterer Vorteil des erfindungsgemäßen Montagesystems besteht darin, dass die Handhabung der Montageplatte bei der Ausrüstung des Schaltschrankes nicht geändert werden muss. Wie bisher kann die vertikal sich erstreckende Montageplatte aus dem Schaltschrank entnommen werden und in der Horizontalen, beispielsweise durch Auflegen auf einen Tisch oder einen Bock, konventionell bearbeitet werden, beispielsweise Hutschienen aufgebracht werden oder Befestigungsöffnungen eingebracht werden. In diesem Zustand können auch Montagemodule erfindungsgemäß an der Montageplatte angebracht werden. Anschließend kann die erfindungsgemäß ausgerüstete Montageplatte wieder aufgerichtet und in den Schaltschrank eingesetzt werden.

In einer Ausführungsart ist das leistenförmige Klemmelement entlang eines Seitenrandes der Montageplatte anbringbar. Vorteilhaft ist dabei, dass das Montagesystem in der Art eines Baukastensystems unterschiedlich ausgebildete Klemmelemente beinhalten kann, die alle eine übereinstimmende Schnittstelle in Richtung auf das zu montierende Montagemodul aufweisen können, aber insbesondere in ihrem zweiten Abschnitt unterschiedlich ausgestaltet sein können, jeweils in Anpassung an die jeweils vorliegende Montageplatte.

In einer Ausführungsart weist das Klemmelement einen Gleitmutterkanal auf, in den beispielsweise eine Ankerschraube oder eine Schraubenmutter zum Verbinden des Klemmelements mit dem Montagemodul einsetzbar ist. Der Gleitmutterkanal kann insbesondere vom zweiten Abschnitt des Klemmelements ausgebildet sein. Insbesondere bei Verwendung eines leistenförmigen Klemmelements können dadurch die Montagemodule einfach entlang des leistenförmigen Klemmelements verschoben werden und an der gewünschten Position fixiert werden.

In einer Ausführungsart weist das Klemmelement eine von der Vorderseite der Montageplatte zugängliche Nut auf für das Einschrauben einer Verbindungsschraube, mittels welcher das Montagemodul mit dem Klemmelement verbindbar ist. Die Nut kann auch ein insbesondere durch Strangpressen eingeformtes oder nachgebildetes Gewinde aufweisen. Die Nut kann insbesondere im zweiten Abschnitt des Klemmelements angeordnet sein.

In einer Ausführungsart weist das Montagemodul einen Montagebügel auf, der mit dem Montagesteg verbunden ist oder verbindbar ist. Der Montagebügel ist durch die Verbindung mit dem Klemmelement auf der Vorderseite der Montageplatte in klemmende Anlage an die Montageplatte bringbar. Durch unterschiedlich ausgestaltete Montagebügel kann beispielsweise der Abstand des Montagesteges von der Montageplatte bestimmt werden. Insbesondere kann das Montagesystem eine Vielzahl unterschiedlich ausgebildeter Montagebügel in der Art eines Baukastensystems aufweisen, wobei erst bei der Montage vor Ort durch die Auswahl des jeweiligen Montagebügels die Abstandsposition des Montagesteges gegenüber der Montageplatte bestimmt werden kann. Alternativ hierzu kann ein durch einen Montagesteg und Montagebügel gebildetes Montagemodul auch vorkonfektioniert sein, und gegebenenfalls auch bereits mit daran angebrachten Einrichtungen an der Montageplatte befestigt werden.

In einer Ausführungsart ist der Montagebügel im Wesentlichen L-förmig oder U-förmig ausgebildet mit einem ersten Schenkel, der im Wesentlichen parallel zu dem Montagesteg verläuft und mit dem Klemmelement verbindbar ist, und einem den ersten Schenkel mit dem Montagesteg verbindenden Abschnitt, der schräg oder vorzugsweise im Wesentlichen rechtwinklig zu dem ersten Schenkel und/oder dem Montagesteg verläuft und dessen Länge den Abstand zwischen dem Montagesteg und der Montageplatte bestimmt. Bei einem U-förmigen Montagebügel ist außerdem ein zweiter Schenkel des Montagebügels mit dem Montagesteg verbunden oder verbindbar. Der zweite Schenkel kann im Wesentlichen parallel zum ersten Schenkel und/ oder zum Montagesteg verlaufen. Durch den Montagebügel ist, gegebenenfalls in Zusammenwirken mit dem Montagesteg, ein U-förmiger Aufnahmeraum gebildet, der mittels eines auslenkbaren Bügelverschlusses verschließbar sein kann. Dadurch ist eine Kabelführung in rechtwinklig zum Montagesteg verlaufender Richtung bereitgestellt, beispielsweise in vertikaler Richtung. Insbesondere wenn die Montagebügel endseitig an den beiden Enden des Montagesteges angeordnet sind, ergibt sich dadurch eine besonders vorteilhafte Kabel- oder Leitungsführung zwischen der Montageplatte und den Montagestegen.

Die Erfindung betrifft auch ein Montagesystem für die Anordnung von beispielsweise elektrischen Einrichtungen, insbesondere in Schaltschränken, wobei das Montagesystem eine Trageinrichtung und ein daran festlegbares Montagemodul mit einem vorzugsweise horizontal verlaufenden Montagesteg aufweist, der vorzugsweise einstückig ausgebildet eine Trageinrichtung aufweist, mittels welcher mindestens eine Einrichtung an dem Montagesteg anbringbar ist, und wobei der Montagesteg mittels mindestens einem Montagebügel an der Trageinrichtung festlegbar ist. Die zugrundeliegende Aufgabe wird dadurch gelöst, dass der Montagebügel und die Trageinrichtung miteinander korrespondierende Hakenelemente und Öffnungen aufweisen, mittels denen der Montagebügel in der Trageinrichtung einhängbar ist, und dass durch das Eingreifen eines Hakenelements in eine Öffnung der Montagebügel und damit das Montagemodul verhakend an der Trageinrichtung festlegbar ist. Die Festlegung kann dabei auch noch durch eine oder mehrere Sicherungsmittel sicherbar sein, beispielsweise durch eine Sicherungsschraube. Das Sicherungsmittel erfüllt dabei vorzugsweise gleichzeitig die Funktion der Sicherstellung einer elektrischen Verbindung des Montagemoduls mit einem elektrischen Schutzleiteranschluss (PE), beispielsweise mit einem elektrischen Masseanschluss des Schaltschrankes.

Die Trageinrichtung kann beispielsweise durch eine Montageplatte gebildet sein, die über geeignete Öffnungen oder auch Hakenelemente verfügt. Alternativ hierzu kann die Trageinrichtung auch durch beispielsweise vertikal verlaufende Tragstege gebildet sein, die auch Bestandteil des Schaltschrankes sein können und/oder Öffnungen oder Hakenelemente aufweisen. In einer Ausführungsart sind an der Trageinrichtung Öffnungen vorgesehen, während der Montagebügel vorzugsweise einstückig ausgebildete, beispielsweise durch ein Aluminiumgussteil realisierte, Hakenelemente aufweist.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine perspektivische Ansicht auf ein erstes Ausführungsbeispiel eines erfindungsgemäßen Montagesystems;
- Fig. 1A: zeigt in vergrößerter Darstellung einen Ausschnitt des Montagesystems der Fig. 1;
- Fig. 2: zeigt eine perspektivische Ansicht des in dem Schaltschrank angeordneten erfindungsgemäßen Montagesystems;
- Fig. 3: zeigt eine Seitenansicht auf den Schaltschrank der Fig. 2;
- Fig. 4: zeigt eine perspektivische Ansicht auf ein erstes Ausführungsbeispiel der Verbindung zwischen Montagemodul und Montageplatte;
- Fig. 4A: in vergrößerter Darstellung einen Ausschnitt der Fig. 4;
- Fig. 5: zeigt den Querschnitt durch die Anordnung der Fig. 4;
- Fig. 6: zeigt eine Querschnitt durch das Klemmelement;
- Fig. 7: zeigt eine perspektivische Ansicht auf das Klemmelement;
- Fig. 8: zeigt ein alternatives Ausführungsbeispiel eines Klemmelements im Querschnitt;
- Fig. 9: zeigt eine perspektivische Ansicht des Klemmelements der Fig. 8;
- Fig. 10: zeigt eine perspektivische Ansicht eines Beispiels eines Montagesystems;
- Fig. 11: zeigt eine perspektivische Ansicht auf einen mit einem Montage-system ausgerüsteten Schaltschrank; und
- Fig. 12: zeigt ein weiteres Beispiel eines Montagesystems.

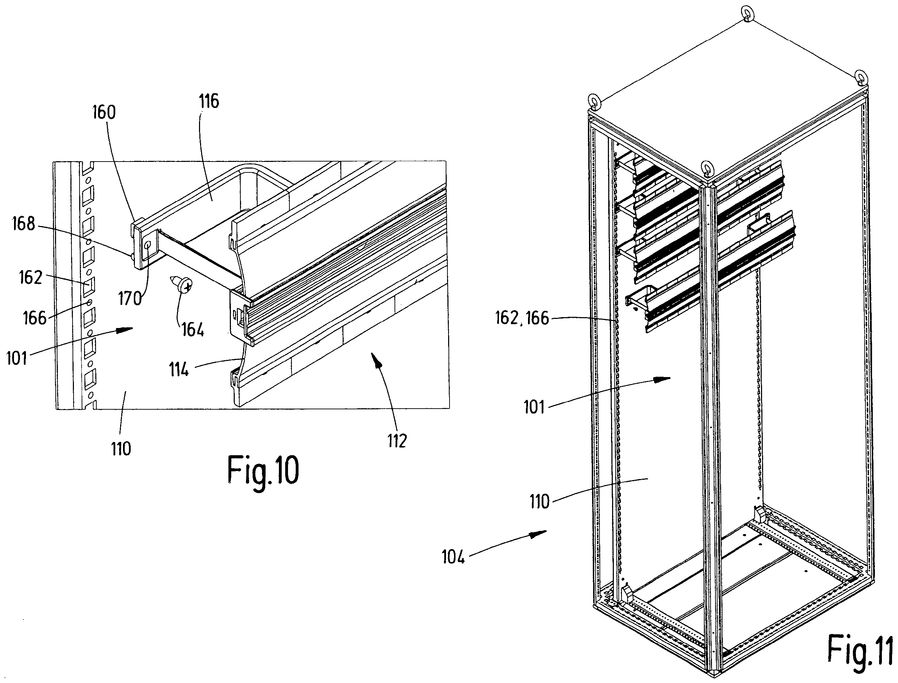

Die Fig. 10 bis 12 dienen lediglich der Erläuterung des Hintergrundes der Erfindung. Die darin gezeigten Ausführungsformen sind nicht Gegenstand eines Anspruches.

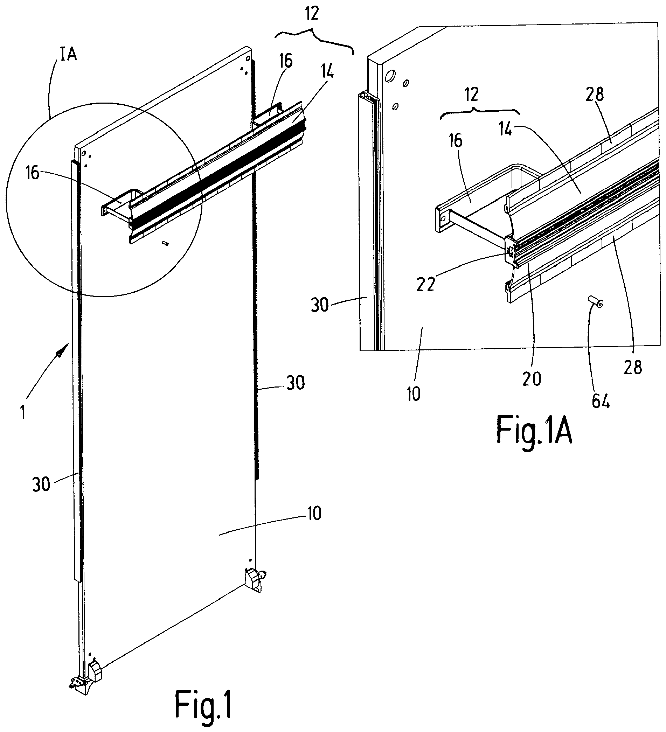

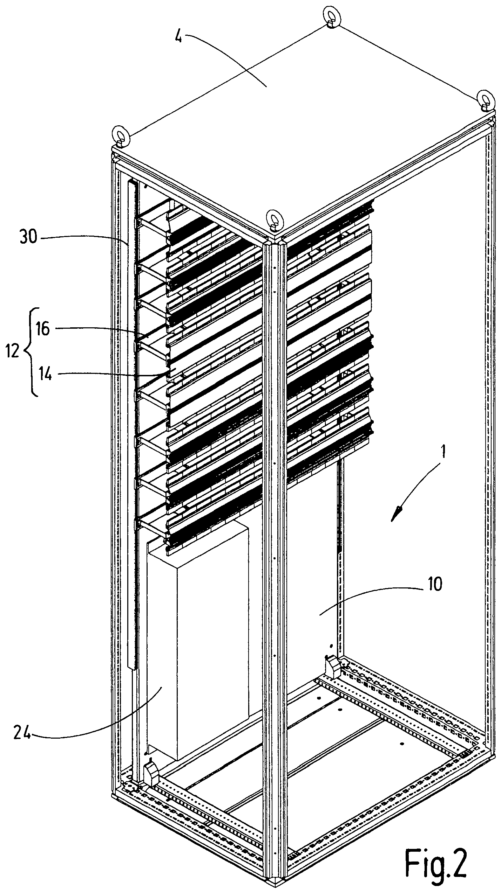

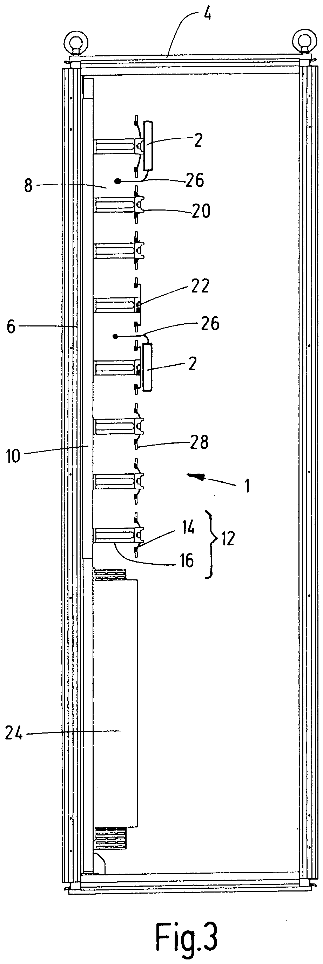

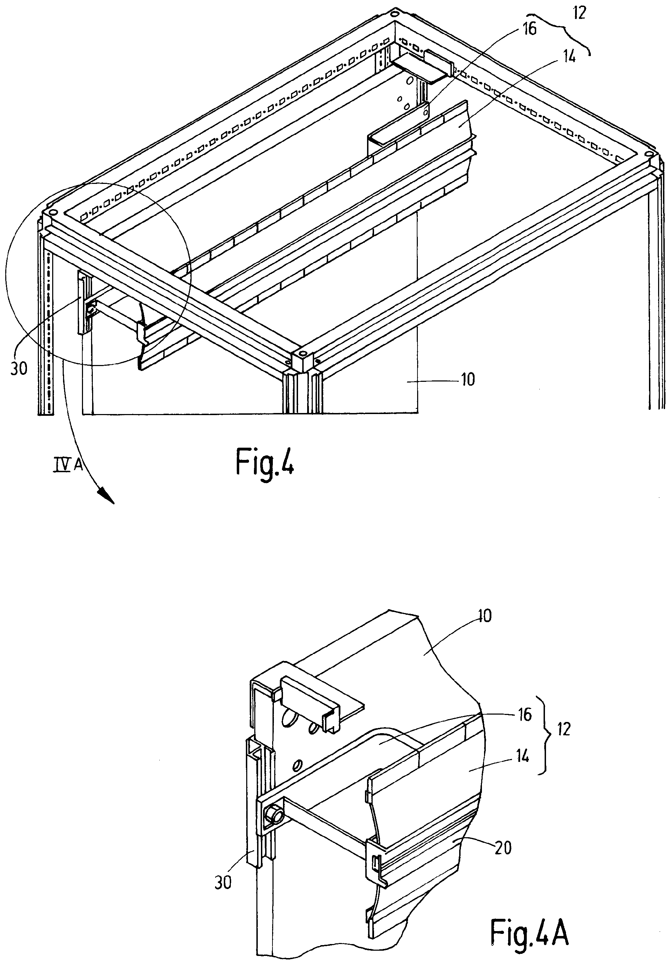

Die Fig. 1 zeigt eine perspektivische Ansicht auf ein erstes Ausführungsbeispiel eines erfindungsgemäßen Montagesystems 1 für die Anordnung von beispielsweise elektrischen Einrichtungen 2 (Fig. 3) in einem Schaltschrank 4 (Fig. 2) und die Fig. 1A zeigt in vergrößerter Darstellung einen Ausschnitt des Montagesystems 1 der Fig. 1. Das Montagesystem 1 weist eine Montageplatte 10 auf, die sich im Wesentlichen über die gesamte Frontfläche des Schaltschrankes 4 erstreckt. Auf der in der Fig. 1 sichtbaren Vorderseite der Montageplatte 10 ist ein Montagemodul 12 festlegbar, das einen sich im Wesentlichen über die gesamte Breite der Montageplatte 10 erstreckenden Montagesteg 14 sowie zwei an den beiden Enden des Montagesteges 14 angeordnete Montagebügel 16 umfasst. Das Montagemodul 12 ist mittels Klemmelementen 30 an der Montageplatte 10 festlegbar. Bei den Klemmelementen 30 handelt es sich um Klemmleisten, die sich im Ausführungsbeispiel der Fig. 1 über mehr als 50 % der Höhe der Montageplatte 10 erstrecken, insbesondere mehr als 65 % und vorzugsweise mehr als 75 %, so dass in diesem Bereich Montagemodule 12 an der Montageplatte 10 festlegbar sind. Es sind auch Ausführungsbeispiele möglich, in denen sich das Klemmelement 30 über die gesamte Länge der Montageplatte 10 erstreckt. Durch ein bezogen auf die Montageplatte 10 langes Klemmelement 30 ist die Steifigkeit erhöht und ein Nachrüsten mit weiteren Montagemodulen 12 vereinfacht. Alternativ hierzu sind Ausführungsbeispiele möglich, in denen sich das Klemmelement 30 über weniger als 25 %, insbesondere weniger als 15 % und sogar weniger als 10 % der Länge der Montageplatte 10 erstreckt. Beispielsweise kann auch jedes Montagemodul 12 ein individuelles Klemmelement 30 aufweisen (Fig. 4A), dass sich nur über wenige Zentimeter erstreckt; dadurch ist die Modularität des Montagesystems 1 erhöht.

Die Fig. 2 zeigt eine perspektivische Ansicht des in dem Schaltschrank 4 angeordneten erfindungsgemäßen Montagesystems 1, und die Fig. 3 zeigt eine zugehörige Seitenansicht auf den Schaltschrank 4 der Fig. 2. Im oberen Bereich sind an der Montageplatte 10 insgesamt acht Montagemodule 12 angeordnet, wobei die Montagemodule 12 unterschiedlich ausgestaltete Montagestege 14 aufweisen, die sich insbesondere hinsichtlich ihrer lateralen Formgebung und Erstreckung sowie ihrer Trageinrichtung unterscheiden, demgegenüber aber im Wesentlichen denselben Abstand von der Montageplatte 10 aufweisen, der im Wesentlichen durch die Abmessungen der identisch ausgebildeten Montagebügel 16 bestimmt ist. An den Trageinrichtungen der Montagestege 14, beispielsweise an einer Hutschiene 20 oder einem Gleitmutterkanal 22 können elektrische Einrichtungen 2 angeordnet werden. Großvolumige oder massereiche Einrichtungen wie beispielsweise Netzteile 24 oder Stromrichter können unterhalb oder oberhalb der Montagemodule 12 unmittelbar auf der Montageplatte 10 angeordnet werden.

Die Verbindung der an den Montagemodulen 12 angeordneten Einrichtungen 2 kann in einem Raumbereich 8 zwischen den Montagestegen 14 und der Montageplatte 10 erfolgen. Beispielsweise können die Anschluss- oder Verbindungsleitungen 26 einer Einrichtung 2 in dem durch Verdrahtungskämme 28 begrenzten Zwischenraum zwischen zwei lateral benachbarten Montagemodulen 12 hindurchgeführt werden und in dem Bereich zwischen den Montagestegen 14 und der Montageplatte 10 in horizontaler oder randseitig auch in vertikaler Richtung geführt werden.

Wie insbesondere aus der Seitenansicht der Fig. 3 ersichtlich ist, hat das erfindungsgemäße Montagesystem 1 auch den Vorteil, dass die Abwärme des Netzteils 24 oder sonstiger, direkt an der Montageplatte 10 angeordneter Einrichtungen, im Wesentlichen in dem Zwischenraum zwischen den Montagestegen 14 und der Montageplatte 10 verläuft, mithin räumlich getrennt von dem Bereich des Schaltschrankes 4, in dem die Einrichtungen 2 auf der Vorderseite der Montagestege 14 angeordnet sind. Dies ermöglicht eine Luftführung in unterschiedlichen Ebenen innerhalb des Schaltschrankes 4, die in vielerlei Hinsicht vorteilhaft ist, nicht nur im Hinblick auf ein möglichst energiesparendes Wärmemanagement, sondern auch durch den Schutz besonders wärmeempfindlicher Einrichtungen 2, beispielsweise Messeinrichtungen, gegenüber der Abwärme von verlustleistungsintensiven Einrichtungen, beispielsweise dem Netzteil 24.

Hinzu kommt, dass durch das erfindungsgemäße Montagesystem 1 die Möglichkeit gegeben ist, beispielsweise durch ein Vorrücken der Montageplatte 10 mit den daran angeordneten Montagemodulen 12, insbesondere durch ein Beabstanden der Montageplatte 10 von einer Rückseite des Schaltschranks 4, einen weiteren, insbesondere vertikalen Luftführungskanal in dem Schaltschrank 4 zu realisieren. So ist beispielsweise in dem Bereich zwischen der Montageplatte 10 und der Rückwand 6 des Schaltschrankes 4 ein Luftstrom von oben nach unten in dem Schaltschrank 4 führbar, der teilweise am unteren Ende der Montageplatte 10 auf die Vorderseite der Montageplatte 10 austritt und anschließend an dem Netzteil 24 entlang strömt oder an den auf den Montagestegen 14 angeordneten Einrichtungen 2 entlang strömt. Zusätzlich hierzu können durch Durchgangsöffnungen in der Montageplatte 10 mit eventuellen Luftführungen in dem Zwischenraum zwischen der Montageplatte 10 und dem Montagesteg 14 auch Luftabzweigungen von der Rückseite der Montageplatte 10 auf die Vorderseite der Montagestege 14 geführt werden und dadurch einen zusätzlich kühlenden Luftstrom beispielsweise für besonders wärmeempfindliche Einrichtungen 2 bereitstellen.

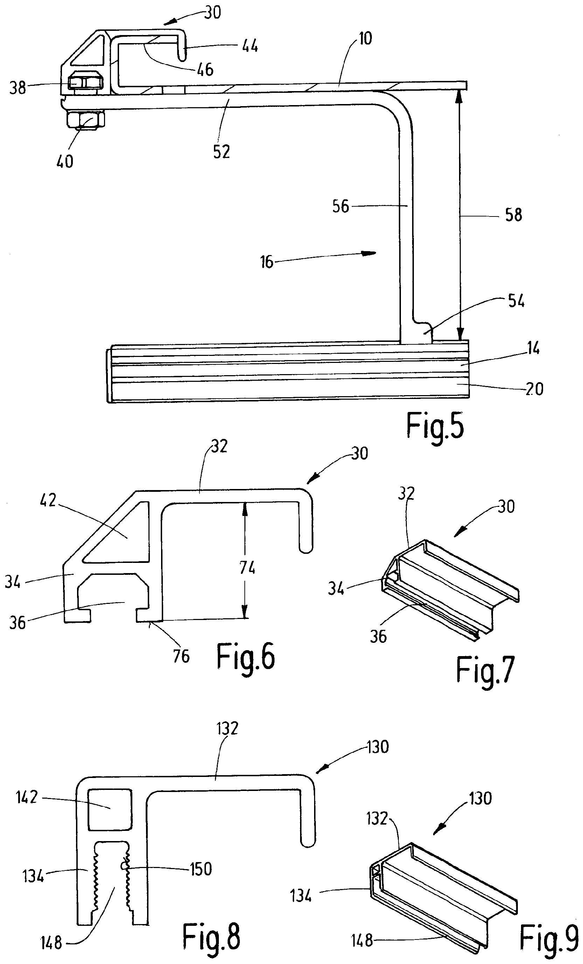

Die Fig. 4 zeigt eine perspektivische Ansicht auf ein erstes Ausführungsbeispiel der Verbindung zwischen Montagemodul 12 und der Montageplatte 10, die Fig. 4A einen vergrößerten Ausschnitt der Fig. 4 und die Fig. 5 zeigt den zugehörigen Querschnitt. Ein im Ausführungsbeispiel leistenförmiges Klemmelement 30, das in der Fig. 6 im Schnitt und in der Fig. 7 perspektivisch dargestellt ist, weist einen ersten Abschnitt 32 auf, der in Anlage an die Rückseite der Montageplatte 10 bringbar ist. Darüber hinaus weist das Klemmelement 30 einen zweiten Abschnitt 34 auf, der auf der Vorderseite der Montageplatte 10 mit dem Montagemodul 12, insbesondere dem Montagebügel 16, derart verbindbar ist, dass die Montageplatte 10 zwischen dem Montagemodul 12, insbesondere dem Montagebügel 16, und dem ersten Abschnitt 32 des Klemmelements 30 klemmbar ist und dadurch das Montagemodul 12 an der Montageplatte 10 klemmend festgelegt ist.

Der Montagebügel 16 ist im Wesentlichen L-förmig mit einem ersten Schenkel 52, der im Wesentlichen parallel zum Montagesteg 14 verläuft und mit dem Klemmelement 30 verbindbar ist, und einem den ersten Schenkel 52 mit dem Montagesteg 14 verbindenden leistenförmigen Abschnitt 56, der vorzugsweise im Wesentlichen rechtwinklig zu dem ersten Schenkel 52 verläuft und dessen Länge 58 den Abstand zwischen dem Montagesteg 14 und der Montageplatte 10 bestimmt. Die Verbindung des Montagebügels 16 mit dem Montagesteg 14 erfolgt in einem verdickten Endabschnitt 54 des Abschnitts 56, beispielsweise mittels einer Schraub- oder Nietverbindung.

Das Klemmelement 30 kann beispielsweise durch ein auf die gewünschte Länge abgelängtes Strangpressprofil gebildet sein. Der zweite Abschnitt 34 des Klemmelements 30 weist einen Gleitmutterkanal 36 auf. In den Gleitmutterkanal 36 ist eine Ankerschraube 38 einsetzbar, deren Gewindeschaft aus dem Gleitmutterkanal 36 austritt und eine Öffnung in dem Montagebügel 16 durchgreift, so dass auf der dem Klemmelement 30 gegenüberliegenden Seite des Montagebügels 16 eine Schraubenmutter 40 aufschraubbar ist. Alternativ hierzu kann die Schraubenmutter 40 auch im Gleitmutterkanal 36 angeordnet sein und beispielsweise eine Flachkopfschraube eine Öffnung des Montagebügels 16 durchgreifen und in den Gleitmutterkanal 36 bzw. die dort angeordnete Gleitmutter einschraubbar sein. Die Kontur des Gleitmutterkanals 36 ist an die jeweils zu verwendende Schraubentechnik angepasst. Zwischen dem ersten Abschnitt 32 und dem zweiten Abschnitt 34 weist das Klemmelement 30 eine im Querschnitt dreieckförmige oder trapezförmige versteifende Hohlkammer 42 auf. Das Klemmelement 30 kann alternativ auch ohne Hohlkammer ausgebildet sein.

Die Montageplatte 10 ist randseitig U-förmig umgebogen zum Zwecke der Aussteifung der Montageplatte 10, insbesondere damit die Montageplatte 10 selbsttragend ist. Der erste Abschnitt 32 des Klemmelements 30 übergreift durch einen im Wesentlichen rechtwinklig abgewinkelten Abschnitt 44 den auf der Rückseite frei auslaufenden Randabschnitt 46 der Montageplatte 10. Der abgewinkelte Abschnitt 44 des Klemmelements 30 kann mit dem ersten Abschnitt 32 des Klemmelements 30 auch einen Winkel von weniger als 90° einschließen, wodurch das Klemmelement 30 verrastend auf den Randabschnitt 46 der Montageplatte 10 aufbringbar ist. Der abgewinkelte Abschnitt 44 des Klemmelements 30 kann alternativ oder ergänzend endseitig auch noch einmal um beispielsweise 90° abgebogen sein und dadurch den frei auslaufenden Randabschnitt 46 der Montageplatte 10 U-förmig umgreifen, wodurch die Positionierung des Klemmelements 30 an der Montageplatte 10 weiter verbessert ist. Abhängig von der Länge des noch einmal umgebogenen Abschnitts des Klemmelements 30 kann das Klemmelement 30 rastend an der Montageplatte 10 festgelegt werden, insbesondere wenn der noch einmal umgebogene Abschnitt relativ kurz ist, oder das Klemmelement 30 kann von oben oder unten eingesetzt und auf die Montageplatte 10 aufgeschoben werden.

Der Abstand 74 zwischen der an die Rückseite der Montageplatte 10 in Anlage bringbaren Fläche des ersten Abschnitts 32 des Klemmelements 30 und einer dem Montagemodul 12 zugewandten Anlagefläche 76 des zweiten Abschnitts 34 des Klemmelements 30 ist kleiner als die Wandstärke der Montageplatte im Bereich des Klemmelements 30, im Ausführungsbeispiel der Fig. 5 kleiner als der Abstand des Randabschnitts 46 von der Montageplatte 10, so dass durch das Verbinden des Montagemoduls 12, insbesondere des Klemmbügels 16 des Montagemoduls 12, mit dem zweiten Abschnitt 34 des Klemmelements 30 das Montagemodul 12 in klemmende Anlage an die Montageplatte 10 bringbar ist

Die Fig. 8 zeigt ein alternatives Ausführungsbeispiel eines Klemmelements 130 im Querschnitt, und die Fig. 9 zeigt eine perspektivische Ansicht des Klemmelements 130. In dem zweiten Abschnitt 134 weist das Klemmelement 130 eine Nut 148 auf, in welche ein Gewinde 150 eingeformt ist, beispielsweise auch durch das Strangpressprofil annähernd oder jedenfalls gleichwirkend realisiert ist. Die Hohlkammer 142 am Übergang vom ersten Abschnitt 132 zum zweiten Abschnitt 134 ist quadratisch.

Die Fig. 10 zeigt eine perspektivische Ansicht eines Beispiels eines Montagesystems 101, wobei der Montagebügel 116 nicht mittels eines Klemmelements 30 an der Montageplatte 110 oder einer sonstigen Trageinrichtung festlegbar ist, sondern der Montagebügel 116 und die Montageplatte 110 miteinander korrespondierende Hakenelemente 160 und Öffnungen 162 aufweisen, mittels denen der Montagebügel 116 und damit das Montagemodul 112 in der Montageplatte 110 einhängbar ist. Durch das Eingreifen des im Beispiel von dem Montagebügel 116 vorzugsweise einstückig ausgebildeten Hakenelements 160 in die Öffnung 162 in der Montageplatte 110 ist der Montagebügel 116 und damit das Montagemodul 112 verhakend an der Montageplatte 110 festlegbar. Die verhakende Festlegung kann durch ein Sicherungselement 164, beispielsweise eine in eine bereits vorbereitete Öffnung 166 in der Montageplatte 110 einschneidende Blechschraube sicherbar sein. Während die Öffnung 162 für das Eingreifen des Hakenelements 160 rechtwinklig oder insbesondere quadratisch ist, ist die Öffnung 166 für das Sicherungselement 164 vorzugsweise verrundet oder kreisrund.

Der Montagebügel 116 kann auch mehrere Hakenelemente 160 aufweisen, die jeweils in eine Öffnung 162 der Trageinrichtung eingreifen können. Alternativ oder ergänzend kann der Montagebügel 116 zusätzlich zu einem Hakenelement 160 noch ein von dem Montagebügel 116 vorzugsweise einstückig ausgebildetes Positionierungselement 168 aufweisen, das in eine Öffnung 162 eingreifen kann, insbesondere in Anlage an den Rand einer Öffnung 162 bringbar ist, und dadurch die Vertikalposition des Montagebügels 116 in Bezug auf die Montageplatte 110 bestimmt. Dadurch ist sichergestellt, dass das Sicherungselement 164 bzw. die hierfür im Montagebügel 116 vorgesehene Öffnung 170 mit der Öffnung 166 in der Montageplatte 110 fluchtet.

Die Fig. 11 zeigt eine perspektivische Ansicht auf einen mit einem Montagesystem 101 ausgerüsteten Schaltschrank 104. Die Öffnungen 162, 166 sind an beiden Längsrändern der Montageplatte 110 in einem festen Rastermaß hintereinander angeordnet. Das Anbringen der Öffnungen 162, 166 in der Montageplatte 110 können beispielsweise gleichzeitig mit den in der Montageplatte 110 ohnehin erforderlichen Öffnungen für das Befestigen der unmittelbar an der Montageplatte 110 anbringbaren Einrichtungen wie etwa das Netzteil 24 erfolgen. Vorteilhaft bei dieser Ausgestaltung ist, dass die Montagemodule 112 vorbereitend an der Montageplatte 110 anbringbar sind und anschließend die Montageplatte 110 zusammen mit den Montagemodulen 112 und gegebenenfalls auch bereits auf den Montagestegen 114 angeordneten Einrichtungen 2 in den Schaltschrank 104 einsetzbar ist.

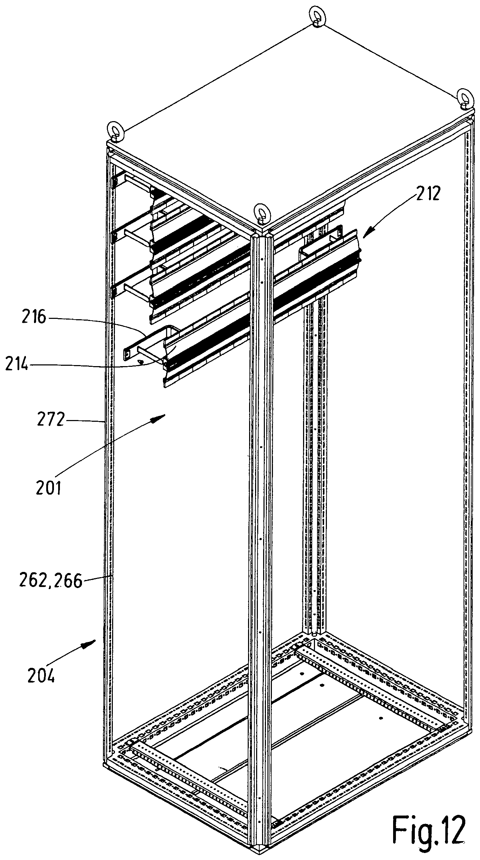

Die Fig. 12 zeigt ein weiteres Beispiel eines Montagesystems 201, bei dem die Montagemodule 212 ebenfalls durch von den Montagebügeln 216 ausgebildeten Hakenelementen festlegbar sind, wobei in diesem Ausführungsbeispiel die Hakenelemente in Öffnungen eingreifen, die von vertikal verlaufenden Profilleisten 272 des Schaltschrankes 204 gebildet sind. Vorteilhaft bei dieser Ausführungsart ist, dass die Öffnungen 262, 266 in der Regel in den Profilleisten 272 aus anderen Gründen bereits vorhanden sind, dementsprechend nicht zusätzlich eingebracht werden müssen.

Wie insbesondere aus der Seitenansicht der Fig. 3 ersichtlich, hat das erfindungsgemäße Montagesystem 1 auch den Vorteil, dass die Abwärme des Netzteils 24 oder sonstiger, direkt an der Montageplatte 10 angeordneter Einrichtungen, im Wesentlichen in dem Zwischenraum zwischen den Montagestegen 14 und der Montageplatte 10 verläuft, mithin räumlich getrennt von dem Bereich des Schaltschrankes 4, in dem die Einrichtungen 2 auf der Vorderseite der Montagestege 14 angeordnet sind. Dies ermöglicht eine Luftführung in unterschiedlichen Ebenen innerhalb des Schaltschrankes, die in vielerlei Hinsicht vorteilhaft ist, nicht nur im Hinblick auf ein möglichst energiesparendes Wärmemanagement, sondern auch durch einen einfachen Schutz besonders wärmeempfindlicher Einrichtungen 2 gegenüber der Abwärme von verlustleistungsintensiven Einrichtungen wie beispielsweise dem Netzteil 24.

Hinzu kommt, dass durch das erfindungsgemäße Montagesystem 1 die Möglichkeit gegeben ist, beispielsweise durch ein "Vorrücken" der Montageplatte 10 mit den daran angeordneten Montagemodulen 12, insbesondere durch ein Beabstanden der Montageplatte 10 von einer Rückseite des Schaltschranks 24, ein weiterer, insbesondere vertikaler Luftführungskanal in dem Schaltschrank 24 realisiert werden kann. So könnte beispielsweise in dem Bereich zwischen der Montageplatte 10 und der Rückwand 6 des Schaltschrankes 4 ein Luftstrom von oben nach unten in den Schaltschrank 4 geführt werden, der teilweise am unteren Ende der Montageplatte 10 auf die Vorderseite der Montageplatte 10 austritt und anschließend an dem Netzteil 24 entlangstreicht oder an den auf den Montagestegen 14 angeordneten Einrichtungen 2 entlangstreicht. Zusätzlich hierzu können durch Durchgangsöffnungen in der Montageplatte 10 mit eventuellen Luftführungen in dem Zwischenraum zwischen der Montageplatte 10 und dem Montagesteg 14 auch Luftabzweigungen von der Rückseite der Montageplatte 10 auf die Vorderseite der Montagestege 14 geführt werden und dadurch einen zusätzlich kühlenden Luftstrom beispielsweise für besonders wärmeempfindliche Einrichtungen 2 bereitstellen.

## Patentansprüche

1. Montagesystem (1) für die Anordnung von, beispielsweise elektrischen, Einrichtungen (2) in Schaltschränken (4), wobei das Montagesystem (1) eine in dem Schaltschrank (4) anordenbare Montageplatte (10) und auf der Vorderseite der Montageplatte (10) mindestens ein Montagemodul (12) mit einem Montagesteg (14) aufweist, und der Montagesteg (14) eine Trageinrichtung (20) aufweist, mittels welcher mindestens eine Einrichtung (2) an dem Montagesteg (14) anbringbar ist, und wobei das Montagesystem (1) ein Klemmelement (30) aufweist, das mit einem ersten Abschnitt (32) in Anlage an die Rückseite der Montageplatte (10) bringbar ist und mit einem zweiten Abschnitt (34) auf der Vorderseite der Montageplatte (10) mit dem Montagemodul (12) derart verbindbar ist, dass die Montageplatte (10) zwischen dem Montagemodul (12) und dem ersten Abschnitt (32) des Klemmelements (30) klemmbar ist und dadurch das Montagemodul (12) an der Montageplatte (10) klemmend festlegbar ist, **dadurch gekennzeichnet, dass** das Klemmelement (30) einen Seitenrand der Montageplatte (10) umgreift und der erste Abschnitt (32) des Klemmelements (30) in flächige Anlage an die Rückseite der Montageplatte (10) bringbar ist.

2. Montagesystem (1) nach Anspruch 1, **dadurch gekennzeichnet, dass** der Abstand zwischen der an die Rückseite der Montageplatte (10) in Anlage bringbaren Fläche des ersten Abschnitts (32) des Klemmelements (30) und einer dem Montagemodul (12) zugewandten Verbindungsfläche des zweiten Abschnitts (34) des Klemmelements (30) kleiner ist als die Wandstärke der Montageplatte (10) im Bereich des Klemmelements (30), so dass durch das Verbinden des Montagemoduls (12) mit dem zweiten Abschnitt (34) des Klemmelements (30) das Montagemodul (12) in klemmende Anlage an die Montageplatte (10) bringbar ist.

3. Montagesystem (1) nach Anspruch 1 oder 2, **dadurch gekennzeichnet, dass** ein Rand der Montageplatte (10) im Bereich des Klemmelements (30) zur Rückseite hin um 180° umgebogen ist und dabei der umgebogene Randabschnitt der Montageplatte (10) auf der Rückseite frei ausläuft, und dass der erste Abschnitt (32) des Klemmelements (30) den frei auslaufenden Randabschnitt der Montageplatte (10) übergreift, wenn das Montagemodul (12) an der Montageplatte (10) festgelegt ist.

4. Montagesystem (1) nach einem der vorangehenden Ansprüche, **dadurch gekennzeichnet, dass** das Klemmelement (30) leistenförmig ist, und dass sich der erste Abschnitt (32) und der zweite Abschnitt (34) des Klemmelements (30) über die gesamte Länge des leistenförmigen Klemmelements (30) erstrecken.

5. Montagesystem (1) nach Anspruch 4, **dadurch gekennzeichnet, dass** das leistenförmige Klemmelement (30) entlang eines Seitenrandes der Montageplatte (10) anbringbar ist.

6. Montagesystem (1) nach einem der vorangehenden Ansprüche, **dadurch gekennzeichnet, dass** das Klemmelement (30) einen Gleitmutterkanal (36) aufweist, in den eine Ankerschraube (38) oder eine Schraubenmutter (40) zum Verbinden des Klemmelements (30) mit dem Montagemodul (12) einsetzbar ist.

7. Montagesystem (1) nach einem der vorangehenden Ansprüche, **dadurch gekennzeichnet, dass** das Klemmelement (130), insbesondere in seinem zweiten Abschnitt (134), eine von der Vorderseite der Montageplatte zugängliche Nut (148) mit einem insbesondere durch Strangpressen eingeformten Gewinde (150) für das Einschrauben einer Verbindungsschraube aufweist, mit welcher das Montagemodul (12) mit dem Klemmelement (130) verbindbar ist.

8. Montagesystem (1) nach einem der vorangehenden Ansprüche, **dadurch gekennzeichnet, dass** das Montagemodul (12) einen Montagebügel (16) aufweist, der mit dem Montagesteg (14) verbunden ist oder verbindbar ist, und dass der Montagebügel (16) durch die Verbindung mit dem Klemmelement (30) auf der Vorderseite der Montageplatte (10) in klemmender Anlage an der Montageplatte (10) ist.

9. Montagesystem (1) nach einem der vorangehenden Ansprüche, **dadurch gekennzeichnet, dass** der Montagebügel (16) im Wesentlichen L-förmig ausgebildet ist, mit einem ersten Schenkel (52), der im Wesentlichen parallel zum Montagesteg (14) verläuft und mit dem Klemmelement (30) verbindbar ist, und einem den ersten Schenkel (52) mit dem Montagesteg (14) verbindenden Abschnitt (56), der vorzugsweise im Wesentlichen rechtwinklig zu dem ersten Schenkel (52) und/oder dem Montagesteg (14) verläuft und dessen Länge den Abstand zwischen dem Montagesteg (14) und der Montageplatte (10) bestimmt.

## Claims

1. Mounting system (1) for the arrangement of, for example, electrical devices (2) in switchgear cabinets (4), wherein the mounting system (1) comprises a mounting plate (10) which can be arranged in the switchgear cabinet (4) and at least one mounting module (12) with a mounting bar (14) on the front side of the mounting plate (10) and the mounting bar (14) has at least one carrier device (20), by means of which at least one device (2) can be attached to the mounting bar (14), and wherein the mounting system (1) includes a clamping element (30), having a first portion (32) which can be brought into contact with the rear side of the mounting plate (10) and a second portion (34) on the front side of the mounting plate (10), which can be attached to the mounting module (12) so that the mounting plate (10) can be clamped between the mounting module (12) and the first section (32) of the clamping element (30) and thereby the mounting module (12) and can be fixed to the mounting plate (10) in a clamping arrangement, **characterised in that** the clamping element (30) engages a lateral edge of the mounting plate (10) and the first section (32) of the clamping element (30) can be brought into planar abutment with the rear side of the mounting plate (10).

2. Mounting system (1) in accordance with claim 1, **characterised in that** the distance between the surface of the first section (32) of the clamping element (30) that can be brought into contact with the rear side of the mounting plate (10) and an attachment surface of the second section (34) facing the mounting module (12) of the clamping element (30) is smaller than the wall thickness of the mounting plate (10) in the area of the clamping element (30) so that, by attachment of the mounting module (12) to the second section (34) of the clamping element (30), the mounting module (12) can be brought into clamping abutment with the mounting plate (10).

3. Mounting system (1) in accordance with claim 1 or 2, **characterised in that** one edge of the mounting plate (10) in the area of the clamping element (30) is bent to the rear side through 180° and thereby the edge portion of the mounting plate (10) to the rear is free, and that the first portion (32) of the clamping element (30) overlaps the free edge portion of the mounting plate (10) when the mounting module (12) is fixed to the mounting plate (10).

4. Mounting system (1) in accordance with one of the preceding claims, **characterised in that** the clamping element (30) is strip-shaped, and that the first section (32) and the second section (34) of the clamping element (30) extend over the whole length of the strip-shaped clamping element (30).

5. Mounting system (1) in accordance with claim 4, **characterised in that** the strip-shaped clamping element (30) can be attached along a lateral edge of the mounting plate (10).

6. Mounting system (1) in accordance with one of the preceding claims, **characterised in that** the clamping element (30) comprises a sliding nut channel (36), in which an anchoring screw (38) or a screw nut (40) can be used for joining the clamping element (30) to the mounting module (12).

7. Mounting system (1) in accordance with one of the preceding claims, **characterised in that** the clamping element (130), in particular in its second portion (134), has a groove (148) accessible from the front side of the mounting plate, with a thread (150), in particular formed by extrusion, for screwing in a connecting screw, with which the mounting module (12) can be attached to the clamping element (130).

8. Mounting system (1) in accordance with one of the preceding claims, **characterised in that** the mounting module (12) has a mounting bracket (16), which is attached or can be attached to the mounting bar (14), and that the mounting bracket (16), by attachment to the clamping element (30) on the front of the mounting plate, is in in clamping contact with the mounting plate (10).

9. Mounting system (1) in accordance with one of the preceding claims, **characterised in that** the mounting bracket (16) is substantially L-shaped, with a first limb (52) which is substantially parallel to the mounting bar (14) and can be attached to the clamping element (30), and a portion (56) attaching the first limb (52) to the mounting bar (14), which preferably extends substantially at right-angles to the first limb (52) and/or to the mounting bar (14) and whose length determines the distance between the mounting bar (14) and the mounting plate (10).

## Revendications

1. Système (1) de montage pour mettre des dispositifs (2), par exemple électriques, dans des armoires (4) de distribution, dans lequel le système (1) de montage a une plaque (10) de montage, qui peut être mise dans l'armoire (4) de distribution, et, sur la face avant de la plaque (10) de montage, au moins un module (12) de montage ayant une réglette (14) de montage et la réglette (14) de montage a un dispositif (20) de support, au moyen duquel au moins un dispositif (2) peut être mis sur la réglette (14) de montage et dans lequel le système (1) de montage a un élément (30) de serrage, qui, par une première partie (32), peut être appliqué à la face arrière de la plaque (10) de montage, et qui, par une deuxième partie (34), peut être assemblé au module (12) de montage sur la face avant de la plaque (10) de montage, de manière à pouvoir serrer la plaque (10) de montage entre le module (12) de montage et la première partie (32) de l'élément de serrage et à pouvoir ainsi fixer avec serrage le module (12) de montage sur la plaque (10) de montage, **caractérisé en ce que** l'élément (30) de serrage enserre un bord latéral de la plaque (10) de montage et la première partie (32) de l'élément (30) de serrage peut être appliquée suivant une surface à la face arrière de la plaque (10) de montage.

2. Système (1) de montage suivant la revendication 1, **caractérisé en ce que** la distance entre la surface, pouvant être appliquée à la face arrière de la plaque (10) de montage, de la première partie (32) de l'élément (30) de serrage et une surface d'assemblage, tournée vers le module (12) de montage, de la deuxième partie (34) de l'élément (30) de serrage, est plus petite que l'épaisseur de paroi de la plaque (10) de montage dans la région de l'élément (30) de serrage, de sorte que, par l'assemblage du module (12) de montage à la deuxième partie (34) de l'élément (30) de serrage, le module (12) de montage peut être appliqué avec serrage à la plaque (10) de montage.

3. Système (1) de montage suivant la revendication 1 ou 2, **caractérisé en ce qu'**un bord de la plaque (10) de montage est, dans la région de l'élément (30) de serrage, coudé de 180° vers la face arrière et ainsi la partie de bord coudée de la plaque (10) de montage sort librement sur la face arrière et **en ce que** la première partie (32) de l'élément (30) de serrage chevauche la partie de bord, sortant librement, de la plaque (10) de montage, lorsque le module (2) de montage est fixé sur la plaque (10) de montage.

4. Système (1) de montage suivant l'une des revendications précédentes, **caractérisé en ce que** l'élément (30) de serrage est en forme de baguette et **en ce que** la première partie (32) et la deuxième partie (34) de l'élément (30) de serrage s'étendent sur toute la longueur de l'élément (30) de serrage en forme de baguette.

5. Système (1) de montage suivant la revendication 4, **caractérisé en ce que** l'élément (30) de serrage en forme de baguette peut être mis le long d'un bord latéral de la plaque (10) de montage.

6. Système (1) de montage suivant l'une des revendications précédentes, **caractérisé en ce que** l'élément (30) de serrage a un canal (36) de glissement, dans lequel une vis (38) d'ancrage ou un écrou (40) femelle peut être inséré pour assembler l'élément (30) de serrage au module (12) de montage.

7. Système (1) de montage suivant l'une des revendications précédentes, **caractérisé en ce que** l'élément (130) de serrage a, notamment dans sa deuxième partie (134), une rainure (148) accessible par la face avant de la plaque de montage et ayant un filetage (150), formé notamment par filage à la presse, pour le vissage d'une vis de liaison par laquelle le module (12) de montage peut être assemblé à l'élément (130) de serrage.

8. Système (1) de montage suivant l'une des revendications précédentes, **caractérisé en ce que** le module (12) de montage a un étrier (16) de montage, qui est relié à la réglette (14) de montage ou qui peut l'être et **en ce que** l'étrier (16) de montage est, par l'assemblage à l'élément (30) de serrage sur la face avant de la plaque (10) de montage, appliqué avec serrage à la plaque (10) de montage.

9. Système (1) de montage suivant l'une des revendications précédentes, **caractérisé en ce que** l'étrier (16) de montage est sensiblement en forme de L, en ayant une première branche (52), qui est sensiblement parallèle à la réglette (14) de montage et qui peut être assemblée à l'élément (30) de serrage, et une partie (56), reliant la première branche (52) à la réglette (14) de montage, qui, de préférence, est sensiblement à angle droit avec la première branche (52) et/ou avec la réglette (14) de montage, et dont la longueur détermine la distance entre la réglette (14) de montage et la plaque (10) de montage.
